# FASCICULE DE BREVET EUROPEEN

(11) **EP 4 220 072 B1**
(45) Date de publication et mention de la délivrance du brevet: **30.09.2026**
(21) Numéro de dépôt: 23171256.3
(22) Date de dépôt: 28.11.2019
(51) Int. Cl.: G01B 9/0209, G01B 11/06

(54) **PROCEDE ET SYSTEME POUR MESURER UNE SURFACE D'UN OBJET COMPRENANT DES STRUCTURES DIFFERENTES PAR INTERFEROMETRIE A FAIBLE COHERENCE**
VERFAHREN UND SYSTEM ZUR VERMESSUNG EINER OBERFLÄCHE EINES OBJEKTS MIT VERSCHIEDENEN STRUKTUREN MITTELS KURZKOHÄRENTER INTERFEROMETRIE
METHOD AND SYSTEM FOR MEASURING A SURFACE OF AN OBJECT COMPRISING DIFFERENT STRUCTURES USING LOW-COHERENCE INTERFEROMETRY

(30) Priorité: 30.11.2018 FR 1872153
(43) Date de publication de la demande: 02.08.2023
(62) Numéro(s) de document de la (des) demande(s) initiale(s) en application de l'article 76 CBE: 19813466.0 / 3 887 755
(73) Titulaire: Unity Semiconductor, 38330 Montbonnot-Saint-Martin (FR)
(72) Inventeur: BOULANGER, M. Jean-François, 38330 Saint-Ismier (FR); BERGOËND, Isabelle, 38330 Saint-Ismier (FR)
(74) Mandataire: IPAZ

(56) Documents cités:
- EP-A1- 2 884 338
- WO-A1-2009/012207
- WO-A1-2018/209438
- WO-A2-2004/079294
- WO-A2-2005/086582
- US-A1- 2015 062 590
- US-A1- 2015 305 614
- ANONYMOUS: "Pattern recognition - Wikipedia", 9 November 2018 (2018-11-09), XP055614216, Retrieved from the Internet <URL:https://en.wikipedia.org/w/index.php?title=Pattern_recognition&oldid=868091442> [retrieved on 20190821]

## Description

### Domaine technique

La présente invention concerne un procédé pour la mesure de la surface d'un objet comprenant des structures différentes par interférométrie à faible cohérence.

Le domaine de l'invention comprend, de manière non limitative, celui des dispositifs de mesure et de contrôle pour l'industrie de la microélectronique ou de l'optique intégrée.

### Etat de la technique

La profilométrie optique permet classiquement de déterminer le profil ou la topographie d'une face ou d'une surface d'un objet. Dans le cas de la profilométrie optique par interférométrie à faible cohérence, une source de lumière à large spectre est utilisée. En faisant varier les chemins optiques des rayonnements de référence ou d'inspection, un signal d'interférence (interférogramme) est obtenu. C'est un signal en intensité qui est fonction de la différence des chemins parcourus par les rayonnements.

L'onde réfléchie sur, ou émergeant de, la surface de l'objet à mesurer subit un déphasage qui dépend des caractéristiques physiques des matériaux présents que l'onde traverse et/ou sur lesquels elle se réfléchit. Ces caractéristiques sont les indices de réfraction complexes et/ou les épaisseurs des empilements de couches des matériaux transparents dans la gamme de longueur d'onde de la source de lumière. Ce déphasage à la réflexion se rajoute au déphasage dû à la topographie.

Lorsque les motifs ou structures présents sur la surface de l'objet analysé sont réalisés avec des matériaux différents ou des empilements de matériaux différents, ou des empilements multicouches transparents, le déphasage à la réflexion est alors différent pour chacune de ces structures.

De par ce fait, la hauteur relative obtenue à partir des signaux d'interférences pour des structures différentes peut être erronée. De même, le cas échéant, des valeurs d'épaisseurs de couches de motifs ou de structures calculées peuvent être erronées.

Il est connu de calculer des phases théoriques à la réflexion en exploitant les informations que l'on a sur les structures, et notamment les matériaux ou les empilements de couches de matériaux, présents. On construit ainsi des modèles théoriques de réflectance que l'on utilise pour corriger les mesures.

Il est également connu de calculer des modèles théoriques de réflectance pour des empilements de matériaux connus au préalable et d'appliquer des méthodes de recalage de ces modèles sur des signaux provenant des interférogrammes pour en déduire des mesures d'épaisseurs de couches minces (inférieures à un micromètre), voir WO 2009/012207 A1, par exemple.

Pour corriger des mesures topographiques et/ou évaluer des épaisseurs de couches à partir de modèles théoriques, il est cependant nécessaire de connaître ou d'identifier les différentes structures de matériaux présentes dans le champ de vue afin de pouvoir appliquer le modèle approprié. Ceci peut être problématique pour des surfaces comportant des structures multiples. En effet, de manière générale, la nature des structures présentes dans le champ de vue et leur répartition spatiale (*layout* en langue anglaise) n'est pas connue.

On connait par ailleurs le document *« Interferometric microscope with true color imaging »*, J.L. Beverage et al., Proc. SPIE 9203, August 2014, qui décrit un procédé basé sur la génération d'images de couleurs en plus des acquisitions de signaux interférométriques dans des microscopes interférométriques pour visualiser la présence de matériaux différents dans le champ de vue à partir de leur réflectance spectrale, analysée par exemple sur trois longueurs d'onde (rouge, vert et bleu). Toutefois, ce procédé nécessite plusieurs acquisitions (une par couleur) et des modifications du système interférométrique avec l'ajout ou la modification de sources de lumière, filtres ou systèmes de détection, rendant ainsi cette approche très complexe et coûteuse en termes de temps de mesure et d'équipements. De plus, en général, on est limité à l'utilisation de trois longueurs d'ondes fixes qui ne sont pas nécessairement les plus discriminatives concernant la réflectance des différents empilements de matériaux de l'objet mesuré.

L'invention a pour objectif de résoudre les problèmes décrits ci-dessus.

### Exposé de l'invention

Un but de la présente invention est de proposer un procédé et un système de mesure de la surface d'un objet pouvant comprendre au moins deux structures différentes qui soient simple à mettre en œuvre et qui ne nécessitent notamment pas l'utilisation de plusieurs éclairages de couleur ou de capteurs.

Un autre but de la présente invention est de proposer un procédé et un système de mesure de la surface d'un objet pouvant comprendre au moins deux structures différentes permettant d'obtenir des mesures de profils de la surface d'un objet corrigées des effets dus aux matériaux ou aux structures présents à la surface de cet objet.

Il est également un but de la présente invention de proposer un procédé et un système de mesure de la surface d'un objet pouvant comprendre au moins deux structures différentes permettant d'obtenir des mesures d'épaisseurs de couches transparentes présentes sur la surface de l'objet.

Il est aussi un but de la présente invention de proposer un procédé et un système de mesure de la surface d'un objet pouvant comprendre au moins deux structures différentes permettant de détecter et caractériser ces structures avec des appareils de mesure actuels avec très peu de, voire sans, modification de leur architecture actuelle.

Au moins un de ces objectifs est atteint avec un procédé de mesure d'une surface d'un objet comprenant au moins une structure par interférométrie optique à faible cohérence, tel que défini par la revendication

L'objet peut être ou comprendre notamment un substrat pour l'industrie de la microélectronique ou de l'optique intégrée sous ses formes, tel qu'une plaquette (ou wafer) de semi-conducteur ou de tout autre matériau (verre), un substrat sur film (*« dicing frame »* en langue anglaise), un substrat avec des circuits intégrés et des interconnexions (*« electrical interconnects »* en langue anglaise), etc.

Dans le présent document, le terme « structure » désigne tout agencement pouvant se trouver à la surface de l'objet, tel que des pistes, couches de matériaux ou empilements de couches de matériaux diélectriques ou conducteurs, composants optiques ou électroniques, etc. Une structure peut ainsi être formée d'au moins une couche de matériau.

Un objet peut ainsi comprendre au moins deux, ou une pluralité de structures différentes réparties sur sa surface.

Les signaux interférométriques peuvent être obtenus par un système de profilométrie. Ces signaux interférométriques peuvent contenir les informations relatives à une altitude ou une hauteur en différents points de la surface à mesurer. Ils peuvent également contenir des informations relatives à la nature de la surface elle-même (matériaux, épaisseurs de couches, etc.).

L'étape d'attribution des signaux interférométriques acquis à des classes de signaux interférométriques, proposé par le procédé selon l'invention, permet ainsi de classifier les signaux interférométriques individuellement selon le type de la structure de laquelle chaque signal a été obtenu. Le type de la structure (par exemple, une simple couche transparente ou un empilement de couches minces de matériaux transparents) est représentée par une structure type avec un signal interférométrique de référence associé.

L'étape d'attribution correspond à une segmentation du champ de vue mesuré sur la surface de l'objet. Le procédé selon l'invention permet ainsi d'aboutir à une segmentation de l'image de la surface de l'objet à mesurer.

Une fois attribué à une classe, chaque signal interférométrique est analysé selon un modèle, ou un modèle profilométrique, correspondant ou propre à sa classe. Une classe peut être définie, par exemple, par un modèle de réflectance, ce modèle de réflectance prenant en compte le ou les matériaux et la géométrie (épaisseurs des couches) de la structure.

Ainsi, grâce au procédé selon l'invention, il est possible d'obtenir une information sur la répartition de différentes structures sur la surface d'un objet, en exploitant un signal interférométrique mesuré par interférométrie optique à faible cohérence, sans avoir besoin d'une connaissance précise de la topologie ou de la localisation de ces structures.

Le procédé selon l'invention permet également d'obtenir des mesures de profils ou de forme de la surface de l'objet corrigées des effets (en particulier de phase) dus aux matériaux et/ou aux structures présentes, et/ou des mesures d'épaisseurs de couches, sans avoir une connaissance préalable précise de la topologie de ces matériaux et/ou de ces structures sur la surface de l'objet.

En outre, l'étape d'attribution peut être réalisée par traitement numérique ou analogique, et n'impacte pas, ou peu, les étapes de mesures des signaux interférométriques. Par conséquent, le procédé selon l'invention peut être mis en œuvre par les dispositifs de mesure actuels sans, ou avec très peu de, modification architecturale, en particulier de la partie de détection de ces dispositifs.

Selon l'invention, l'étape d'attribution du signal interférométrique à une classe comprend une étape d'initialisation de classes.

Cette étape d'initialisation de classes peut comprendre la fourniture d'au moins l'un des éléments suivants :
- une liste de classes ;
- une estimation *a priori* d'un nombre de classes présentes dans le champ de vue.

Cette étape d'initialisation peut résulter en un ensemble de classes susceptibles d'être représentées par les signaux interférométriques mesurés dans le champ de vue. Elle permet ainsi de disposer d'un ensemble de classes correspondant, ou susceptibles de correspondre, aux structures réellement présentes dans le champ de vue. Cette étape d'initialisation peut également résulter dans un nombre de classes défini a priori, permettant une répartition des signaux interférométriques dans ce nombre de classes.

Avantageusement, la fourniture d'une liste de classes peut comprendre au moins l'une des étapes suivantes :
- détermination de classes à partir de mesures de signaux interférométriques sur une surface de référence (du même objet ou d'un autre objet) ayant des structures connues ;
- détermination de classes à partir de connaissances à priori (telles que des masques, dessins ou descriptions) sur les structures présentes sur la surface de l'objet.

On dispose ainsi d'une liste de classes susceptibles d'être présentes sur l'objet à mesurer avec leurs signaux interférométriques de référence associés. Une liste de classes ainsi fournie est robuste et permet, par la suite, d'utiliser des méthodes de classification simples.

Cette liste de classes peut être, par exemple, obtenue à partir de masques, dessins (« *layout* ») ou descriptions des structures présentes sur l'objet, lorsque ces informations sont disponibles. On peut alors en déduire par calcul des signaux d'interférence de référence théoriques et ainsi déterminer un signal interférométrique de référence pour chaque classe.

La liste de classes peut également être obtenue expérimentalement, à partir, par exemple, de mesures effectuées sur un objet de référence avec des structures connues.

Selon l'invention, l'étape d'initialisation de classes comprend, ou est réalisée par, les étapes suivantes :
- répartition des signaux interférométriques acquis selon des régions homogènes du champ de vue, où les régions sont homogènes selon un critère prédéfini ;
- détermination des classes à partir des signaux interférométriques répartis dans lesdites régions homogènes.

Cette étape d'initialisation selon l'invention peut également être qualifiée de « segmentation préliminaire ». Elle réalise en effet une première segmentation du champ de vue en régions homogènes (selon le critère prédéfini) qui peut être utilisée pour rendre l'étape d'initialisation des classes plus robuste et plus précise en termes de choix ou de construction de classes, et améliorer la classification pixel par pixel des signaux interférométriques. Les classes ainsi déterminées peuvent être obtenues directement à partir des signaux interférométriques dans les zones homogènes, par exemple à partir de moyennes ou d'autres paramètres statistiques. Les signaux interférométriques dans les zones homogènes peuvent être également utilisés pour identifier des classes parmi une liste prédéfinie de classes.

Les régions homogènes peuvent être notamment déterminées en exploitant une propriété des signaux interférométriques, telle qu'une intensité, une réflectance ou une réflectance spectrale de ces signaux interférométriques. Le critère prédéfini peut être par exemple lié à des variations d'intensité ou de réflectance maximales admissibles.

Avantageusement, l'étape d'attribution du signal interférométrique à une classe peut comprendre la comparaison du signal interférométrique acquis au signal interférométrique de référence.

De préférence, cette comparaison peut comprendre, ou être réalisée par, la détermination d'une distance (telle qu'une distance euclidienne) entre le signal interférométrique acquis et le signal interférométrique de référence.

Alternativement ou en plus, l'étape d'attribution du signal interférométrique à une classe peut comprendre une itération des étapes suivantes :
- association du signal interférométrique à une classe ;
- pour chaque classe, détermination d'un nouveau signal interférométrique de référence à partir des signaux interférométriques attribués à cette classe. L'itération est continuée jusqu'à ce qu'un critère de convergence prédéterminé soit satisfait.

Ainsi, en effectuant une itération des étapes d'association du signal interférométrique à une classe et de détermination d'un nouveau signal de référence pour cette classe, la précision de l'identification des classes pour chaque signal interférométrique peut être améliorée. En outre, les classes peuvent être initialisées à partir des signaux interférométriques eux-mêmes, dans le cas notamment où l'étape d'initialisation ne fournit qu'un nombre de classes.

Pour ce faire, chaque classe, ou plus particulièrement le signal interférométrique de référence, est déterminé en exploitant les signaux interférométriques attribués à cette classe. Un nouveau signal interférométrique de référence peut, par exemple, être calculé à partir de la moyenne des signaux interférométriques attribués à cette classe, et éventuellement du signal d'interférence de référence précédent. Les itérations sont poursuivies jusqu'à satisfaire un critère de convergence prédéterminé. Le critère de convergence peut comprendre, par exemple, une mesure de variation ou de distance entre des signaux interférométriques issus d'itérations successives. Il peut également être basé sur le fait qu'entre 2 itérations, plus aucun point de mesure ne change de classe.

Avantageusement, l'étape d'analyse du signal interférométrique peut comprendre une identification d'une structure ou d'une propriété d'une structure en fonction de la classe du signal interférométrique. Cette identification peut notamment être réalisée à partir de la détermination de la densité spectrale optique du signal interférométrique, ou de sa réflectance spectrale.

En effet, l'utilisation de la densité spectrale optique ou de la réflectance spectrale permet de différencier des structures ou matériaux présents sur la surface de l'objet, et ce même en utilisant un capteur d'intensité ou d'imagerie produisant des interférogrammes en niveaux de gris.

Grâce à la connaissance de la classe à laquelle chaque signal interférométrique a été attribué, il est ainsi possible d'attribuer ou de faire correspondre les signaux interférométriques à un type de structure et/ou de matériau que représente leur classe.

Il est ainsi possible de déterminer précisément la géométrie de l'objet, c'est-à-dire, la répartition des différentes structures à la surface de l'objet.

Avantageusement, l'étape d'analyse du signal interférométrique peut comprendre la détermination de l'épaisseur d'une ou de plusieurs couches transparentes en appliquant un modèle de réflectance spectrale dépendant de la classe du signal interférométrique.

On peut ainsi mettre en œuvre des techniques de réflectométrie connues par recalage de modèle pour la mesure d'épaisseurs de couche mince. L'attribution du signal interférométrique à une classe permet de choisir le bon modèle.

Avantageusement, l'étape d'analyse du signal interférométrique peut comprendre une détermination de hauteur de la surface au point de mesure en prenant en compte un facteur de déphasage dudit signal interférométrique dépendant de sa classe.

Ce facteur de déphasage permet de corriger le déphasage à la réflexion dû, par exemple, à des pertes d'absorption ou des réflexions dans des couches de matériau.

Avantageusement, l'étape d'acquisition peut être réalisée par une mesure d'un signal interférométrique pour chaque pixel d'un capteur effectuant une mesure plein champ, où chaque pixel du champ de vue du capteur correspond à un point de mesure.

Avantageusement, le procédé selon l'invention peut être mis en œuvre avec un objet de type substrat semi-conducteur.

Selon un autre aspect de la même invention, il est proposé un système de mesure par interférométrie optique à faible cohérence, tel que défini par la revendication 12.

Le système de profilométrie produit des mesures interférométriques qui exploitent les différences de chemin optique (ou temps de propagation) entre un faisceau de référence et un faisceau de mesure réfléchi par la surface à mesurer. En faisant varier la différence de chemin optique au cours du temps, on obtient un signal interférométrique dans le domaine temporel.

Alternativement, d'autres systèmes de mesures interférométriques peuvent être utilisés, par exemple, permettant d'obtenir des signaux interférométriques dans le domaine spectral, directement fonction des longueurs d'onde utilisées. De tels systèmes peuvent mettre en œuvre, par exemple, un interféromètre illuminé par une source de lumière à large spectre, avec un dispositif de détection permettant une analyse spectrale du signal interférométrique, tel qu'un spectromètre placé devant des photodétecteurs. Il est également possible d'utiliser des sources de lumière ajustables en longueur d'onde.

Dans une version avantageuse, le dispositif d'acquisition d'un signal interférométrique peut comprendre un capteur interférométrique plein champ.

Dans ce cas, un point de mesure peut correspondre à un pixel du champ de vue dudit capteur. Un tel capteur matriciel peut être, par exemple, une caméra CCD (pour *« Charged Coupled Device »*) ou CMOS (pour *« Complementary Metal Oxide Semiconductor »*).

Le procédé et le système selon l'invention peuvent chacun être utilisé pour la mesure d'une surface d'un substrat semi-conducteur ou d'un substrat transparent dans le spectre visible sous toutes formes possibles (wafer, wafer on frame, panel, etc.). La surface à mesurer peut comporter différents types de structures telles que des couches de matériaux diélectriques ou conducteurs, et des composants optiques ou électroniques. En particulier, le procédé et le système selon l'invention peuvent chacun être utilisé pour la mesure de leurs profils corrigés et de la topologie des structures et/ou matériaux présents sur la surface, ou encore pour imager ladite surface. Un profil correspond à la hauteur relative, ou à la hauteur par rapport à une référence, d'un ensemble de points de la surface. La mesure du profil permet également de faire état de la rugosité de la surface de l'objet.

Plus généralement, le procédé et le système selon l'invention peuvent chacun être utilisé pour la mesure d'une surface d'un objet, en particulier pour la caractérisation et/ou l'imagerie d'au moins un motif de ladite surface.

### Description des dessins

D'autres avantages et caractéristiques apparaitront à l'examen de la description détaillée d'exemples nullement limitatifs, et des dessins annexés sur lesquels :
[Fig. 1] est une représentation schématique d'un exemple de réalisation non limitatif d'un procédé selon l'invention ;
[Fig. 2] est une représentation schématique d'un exemple de mise en œuvre du procédé de la Figure 1 ;
[Fig. 3] est une représentation schématique d'un exemple de réalisation non limitatif d'un système selon l'invention ;
[Fig. 4] est une représentation schématique d'un exemple de mise en œuvre du procédé de la Figure 1 ;
[Fig. 5] est une représentation schématique d'un exemple de mise en œuvre du procédé de la Figure 1 ;
[Fig. 6] est une représentation schématique d'un exemple de mise en œuvre du procédé de la Figure 1 ;
[Fig. 7] est une représentation schématique d'un exemple de mise en œuvre du procédé de la Figure 1 ; et
[Fig. 8] est une représentation schématique d'étapes du procédé selon l'invention selon un exemple non limitatif.

### Description détaillée de l'invention

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est couverte par l'étendue des revendications.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

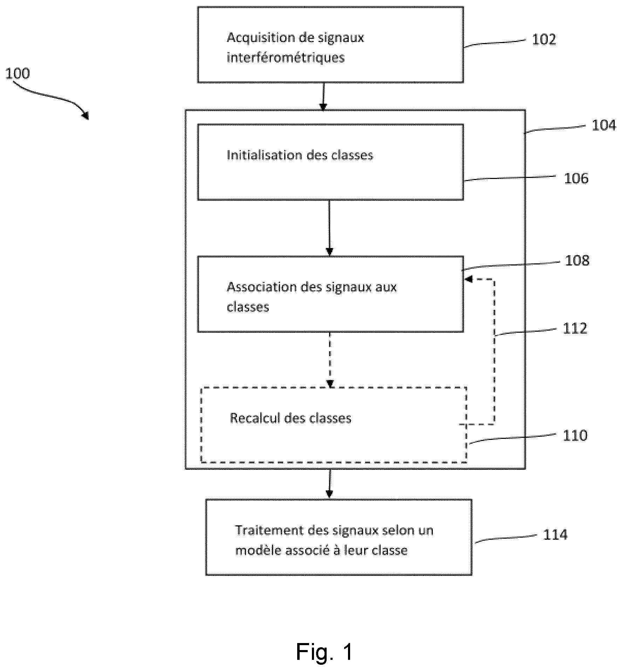

La Figure 1 est une représentation schématique d'un exemple de réalisation non limitatif d'un procédé selon l'invention.

Le procédé 100 comprend une étape 102 d'acquisition d'un signal interférométrique en une pluralité de points de mesure sur une surface d'un objet, par exemple à l'aide d'un capteur interférométrique plein champ comme détaillé ci-après. Dans ce cas, chaque pixel du capteur correspond à un point de mesure, et un signal interférométrique est mesuré pour chaque pixel dans le champ de vue du capteur.

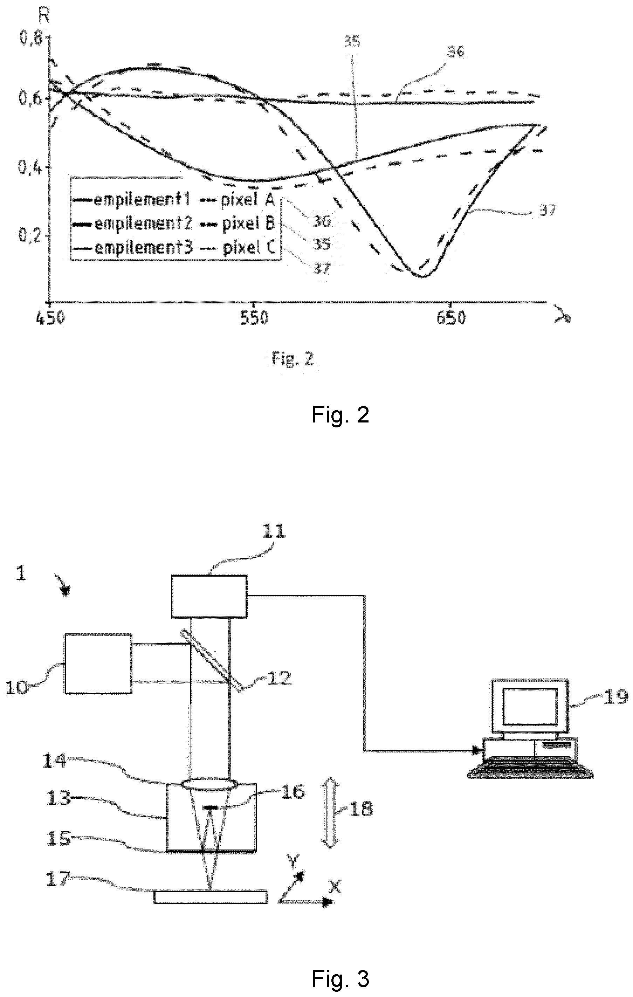

Un exemple de l'acquisition des signaux interférométriques sera décrit plus en détails en référence à la Figure 3 ci-dessous.

Le procédé 100 comprend en outre une étape 104 d'attribution de chaque signal interférométrique mesuré à une classe parmi un ensemble de classes. Chaque classe est représentée par un signal interférométrique de référence.

Dans certains modes de mise en œuvre, ces classes de signaux interférométriques de référence correspondent, ou sont associées à, des structures ou des types de structures particulières pouvant être présentes sur la surface de l'objet à mesurer. Les signaux interférométriques de référence peuvent alors être choisis de telle sorte à être représentatifs de signaux interférométriques particuliers acquis sur différents types de structures telles que :
- des structures en matériaux particuliers (silice, silicium, etc.), transparents ou opaques (métal, etc.) ; et/ou
- des structures constituées de matériaux transparents, ou d'empilements de matériaux transparents, selon des épaisseurs ou des gammes d'épaisseurs particulières.

L'ensemble de classes est construit ou initialisé pendant une étape 106 d'initialisation de classes.

De manière générale, l'initialisation permet de définir et/ou de sélectionner des classes appropriées, c'est-à-dire, des classes qui sont représentatives des types de structures réellement présents dans le champ de vue du capteur.

On peut disposer d'une liste de classes susceptibles d'être présentes sur la surface de l'objet à mesurer avec leurs signaux interférométriques de référence, cette liste pouvant être obtenue à partir de masques, dessins (« *layout »*) ou descriptions des structures présentes sur l'objet.

Des classes peuvent également être obtenues expérimentalement, à partir, par exemple, de mesures effectuées sur un objet de référence avec des structures connues.

Selon une autre variante, on peut simplement définir un nombre de classes a priori, et utiliser un algorithme de classification, tel que l'algorithme connu des K-moyennes (*« K-Means »* en langue anglaise), pour générer les classes à partir de l'ensemble des signaux interférométriques mesurés. Toutefois, cette méthode peut avoir l'inconvénient de générer des classes qui ne sont pas optimales.

Bien entendu, toutes ces variantes peuvent être combinées, avec des classes définies théoriquement, et/ou définies expérimentalement, et/ou définies en nombre.

Selon un mode de réalisation, l'étape d'initialisation 106 du procédé 100 selon l'invention peut comprendre une étape de segmentation préliminaire. Cette étape de segmentation préliminaire peut être réalisée par le regroupement des signaux interférométriques mesurés, dans le champ de vue, selon des régions considérées comme homogènes selon un critère. Ce critère peut être, par exemple, une valeur d'une réflectance globale ou à des longueurs d'ondes particulières. On considère alors qu'une région homogène correspond à une classe, ou en d'autres termes ne comprend que des mesures interférométriques appartenant à une même classe. Ainsi, on peut déterminer une classe unique pour une région homogène, et donc attribuer l'ensemble des signaux interférométriques de cette région homogène à cette classe. La segmentation préliminaire permet ainsi plus efficacement de sélectionner ou d'identifier les classes effectivement présentes et appropriées pour effectuer la classification pixel par pixel de l'étape suivante. En effet, la classification pixel par pixel peut permettre une meilleure précision de classification sur des motifs fins (structures à l'échelle de quelques pixels).

Selon un premier exemple, il est possible de ne conserver que des classes qui ont pu être associées aux régions homogènes telles que définies par la segmentation préliminaire, choisies par exemple parmi un ensemble de classes prédéfinies. Il est également possible d'affiner les signaux interférométriques de référence des classes sélectionnées grâce aux données issues des mesures, en remplaçant, par exemple, le signal interférométrique de référence d'une classe par le signal moyen calculé sur l'ensemble des régions homogènes associées à cette classe.

Selon un deuxième exemple, il est possible de définir les classes directement à partir de signaux d'interférences obtenus, par exemple en moyenne, sur des zones homogènes.

Les méthodes de segmentation préliminaire applicables peuvent comprendre, par exemple :
- des méthodes basées sur une détection des contours, de type ligne de partage des eaux par exemple, ces méthodes visant à utiliser les contours ou les gradients dans l'image pour délimiter les différentes régions ;
- des méthodes de segmentation basées sur une détection des régions, en utilisant des champs de Markov par exemple, ces méthodes visant à séparer le champ de vue en différentes régions homogènes.

Un exemple de cette étape de segmentation préliminaire sera détaillé ci-dessous.

Lors d'une étape 108 du procédé 100, les signaux interférométriques mesurés *I*(*x*,*y*) sont associés ou attribués, par pixels, aux classes construites préalablement.

De manière générale, cette étape 108 d'association met en œuvre une comparaison entre chaque signal interférométrique, à chaque point mesuré, et le signal interférométrique de référence de chaque classe. Les signaux interférométriques sont respectivement attribués à la classe pour laquelle la meilleure similitude ou la meilleure proximité avec le signal interférométrique de référence a été trouvée.

La comparaison des signaux interférométriques par pixels avec les signaux interférométriques de référence peut être réalisée en effectuant des calculs de distance tels que des calculs de distance Euclidienne, ou toute autre distance ou toute autre mesure mettant en évidence un écart entre deux signaux.

De préférence, la comparaison peut être effectuée notamment en utilisant la réflectance spectrale des signaux interférométriques, obtenue par transformée de Fourier des signaux interférométriques temporels mesurés.

Bien entendu, d'autres méthodes de comparaison peuvent être mises en œuvre, qui exploitent des informations temporelles, de forme ou de phase des signaux interférométriques.

La Figure 2 illustre un exemple d'attribution de signaux interférométriques à des classes prédéfinies, en utilisant les réflectances spectrales. En traits pleins sont représentés des réflectances spectrales correspondant aux signaux interférométriques de référence représentatifs de trois classes. En pointillés sont représentés des réflectances spectrales correspondant aux signaux interférométriques mesurés en trois points de mesure ou pixels sur l'image, et attribués, respectivement à ces classes. Chaque paire 35, 36, 37 de signal mesuré - signal de référence représente ainsi un type de structure différente.

Différents algorithmes de classification peuvent être mis en œuvre pour attribuer les signaux interférométriques aux classes, c'est-à-dire, pour classifier les signaux interférométriques.

Selon l'invention telle que revendiquée, les signaux sont attribués aux classes en utilisant des techniques par apprentissage.

Selon un premier exemple, une telle technique d'apprentissage met en œuvre des machines à vecteurs de support (*« Support vector machine »* ou SVM en anglais) qui nécessitent un ensemble de classes d'apprentissage. Cet ensemble peut être fourni, par exemple, lors de l'étape 106 d'initialisation du procédé 100, et notamment par une connaissance théorique ou expérimentale des caractéristiques de certains signaux interférométriques attendus ou mesurés sur la surface de l'objet.

Selon un deuxième exemple, une technique d'apprentissage implique des réseaux de neurones. Les données d'apprentissage (correspondant aux signaux interférométriques de référence) peuvent ainsi être prédéfinis théoriquement ou expérimentalement ou être déduites lors des apprentissages en acceptant ou en rejetant certaines d'entre elles.

Autrement dit, la classification des signaux interférométriques est réalisée en utilisant une technique d'apprentissage. Les signaux interférométriques acquis sont ainsi classifiés selon une pluralité de classes. Comme exposé plus haut, chaque classe est associée à un signal interférométrique de référence représentatif d'une structure type sur le substrat.

Selon des exemples non revendiqués, des méthodes de classification simple au plus proche voisin peuvent être utilisées. Pour tout pixel du champ de vue du capteur, son signal interférométrique ou le spectre de réflectance correspondant est comparé à tous les signaux interférométriques de référence ou aux spectres de réflectance de référence correspondant. Cette comparaison peut être effectuée, par exemple, en utilisant une distance euclidienne. Le signal interférométrique du pixel est ensuite attribué à la classe la plus « proche » ou, en d'autres termes, pour laquelle la distance ainsi déterminée est minimale. Cette méthode est notamment appropriée pour classifier des pixels dans un ensemble de classes prédéfinies.

Selon encore d'autres exemples non revendiqués, on peut également utiliser des méthodes fondées sur une opération de classification, par exemple celle des K-moyennes évoquée précédemment. Les points de mesure associés aux pixels de l'image sont ainsi divisés en k groupes ou classes issues, par exemple, de l'étape 106 d'initialisation du procédé 100 selon l'invention.

Pour l'algorithme des K-moyennes, les classes peuvent être issues notamment d'une information a priori qui peut être le nombre de classes (valeur de k) attendues. Alternativement, l'algorithme peut également être initialisé avec un ensemble de classes issues de connaissances complètes ou approximatives des caractéristiques des signaux d'interférence ou des signaux de réflectance spectrale de référence associés à des structures mesurées ou théoriques présentes sur la surface de l'objet. Cela permet d'initialiser l'algorithme avec une meilleure précision et de minimiser les erreurs de classification.

L'étape d'attribution ou association 108 peut ensuite être réalisée par la minimisation d'une fonction de distance qui peut être la somme des carrés des distances entre les signaux de réflectance spectrale de chaque pixel par rapport aux réflectances spectrales de référence de la classe à laquelle le pixel est attribué. Ces signaux de référence correspondent aux signaux moyens en chaque classe.

Un exemple d'application de la technique des K-moyennes sera décrit ci-dessous.

De manière avantageuse, le procédé 100 selon l'invention peut également comprendre une étape 110 de détermination, pour chaque classe à laquelle des signaux interférométriques ont été associés, d'un nouveau signal interférométrique de référence à partir des signaux interférométriques attribués à cette classe. Un nouvel ensemble de classes est ainsi formé. Les nouveaux signaux interférométriques de référence (ou les réflectances spectrales correspondantes) peuvent, par exemple, être calculés à partir de la moyenne des signaux interférométriques attribués à la classe concernée et, éventuellement, du signal d'interférence de référence initial. Ensuite, les signaux interférométriques mesurés sont de nouveau attribués aux nouvelles classes (étape 112 de la Figure 1). Les itérations sont poursuivies jusqu'à satisfaire, par exemple, un critère de convergence prédéterminé. Ce critère de convergence peut, par exemple, prendre en compte le déplacement des centres de classes : la convergence est atteinte à partir du moment où les centres ne bougent plus (ou moins qu'une certaine valeur). Ce critère de convergence peut également prendre en compte le fait que la convergence est atteinte lorsque plus aucun pixel (ou un nombre de pixels inférieur à une valeur) ne change de classe d'une itération à l'autre.

L'itération des étapes d'attribution 108 et de détermination 110 d'un nouveau signal de référence est particulièrement adaptée pour la classification selon la méthode des K-moyennes, les classes pouvant être améliorées de manière itérative à partir des mesures.

L'étape d'attribution 104 des signaux interférométriques à des classes se termine après la classification de tous les signaux.

En référence à la Figure 1, le procédé 100 selon l'invention comprend en outre une étape 114 de traitement ou d'analyse des signaux interférométriques associés aux différents points de mesure. De manière avantageuse, cette étape 114 de traitement est réalisée selon des méthodes propres aux classes auxquelles ils sont associés.

Le procédé de l'invention permet ainsi notamment d'appliquer des analyses particulières, ou des traitements particuliers, aux signaux interférométriques des différents pixels, en fonction de la classe à laquelle ils appartiennent ou de la structure correspondante. Il est ainsi possible, par exemple, d'effectuer :
- un calcul de statistique différenciée, par exemple de rugosité, en fonction des différentes structures identifiées ;
- un calcul d'une cartographie d'estimation d'épaisseur de matériaux transparents, par exemple en appliquant un algorithme de réflectométrie ;
- des mesures de profils de topographie corrigées, et en particulier affranchies des contributions des caractéristiques physiques des matériaux, telles que leurs indices de réfraction complexes et les épaisseurs pour les empilements de couches dans le cas de matériaux transparents. Il est notamment possible d'appliquer, pour obtenir des informations de hauteur corrigées :
   - un facteur de déphasage simple, par exemple comme pour le cas d'une couche métallique ;
   - un modèle de réflectance d'empilement de couches, pour obtenir une estimation de l'épaisseur d'une couche transparente.

Par la suite, un exemple de mise en œuvre du procédé selon l'invention sera décrit de manière détaillée.

En référence à la Figure 3, un exemple de système profilométrique ou profilomètre optique mis en œuvre selon l'invention est décrit.

Ce système profilométrique ou profilomètre optique 1 comprend un dispositif interférométrique 13 qui peut être de type Michelson, Mirau ou autre. Dans le mode de réalisation présenté, ce dispositif interférométrique 13 est illustré sous la forme d'un objectif interférométrique 13 de type Mirau avec une lentille ou une optique d'imagerie 14, une lame séparatrice 15 semi-réfléchissante et un miroir de référence 16. Le profilomètre optique 100 comprend également un système d'éclairage 10 qui émet une lumière avec un spectre large et qui peut inclure, par exemple, une diode électroluminescente LED (pour *« Light Emitting Diode »*) ou une lampe halogène, et un capteur d'imagerie ou une caméra 11 avec par exemple un capteur d'imagerie matriciel de type CCD ou CMOS. Le profilomètre optique 1 comprend également un dispositif de balayage 18 actionné, par exemple, par un actuateur piézoélectrique qui permet de faire varier relativement les trajets optiques dans les deux bras de l'interféromètre, entre la lame séparatrice 15 et, respectivement, la surface de l'objet à mesurer 17 et le miroir de référence 16. Le profilomètre optique comprend enfin un module de traitement d'image 19 ou de signaux interférométriques, agencé pour mettre en œuvre le procédé de traitement des mesures selon l'invention.

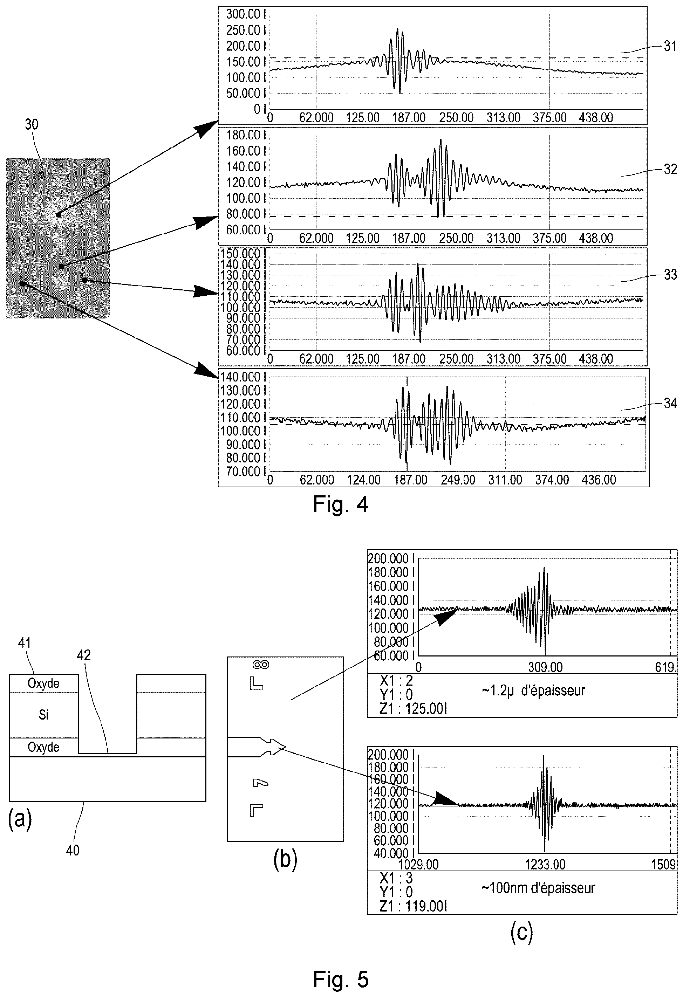

La Figure 4 illustre une image 30 en intensité d'un champ de vue d'un substrat semi-conducteur sur lequel des structures constituées d'empilements de matériaux différents ont été réalisées. La Figure 4 montre également des exemples de signaux interférométriques 31, 32, 33, 34 correspondants à des types de structures différents.

On peut observer que les différentes zones distinctes sur l'image d'intensité 30 génèrent des signaux d'interférences 31-34 significativement différents. Ces signaux acquis aux différents points de l'image 30 dans le champ de vue peuvent être identifiés et exploités selon le procédé 100 de l'invention, afin de pouvoir les traiter de manière différentiée en fonction de la nature des structures présentes dans ce champ de vue.

Dans le mode de mise en œuvre décrit, les signaux d'interférence sont analysés et classifiés en exploitant leur réflectance spectrale. Un signal d'interférence en lumière blanche (ou polychromatique) peut être décomposé en une collection de signaux d'interférence en éclairage monochromatique. Cette décomposition du signal d'interférence peut se faire en fonction du nombre d'onde k, avec k = 2 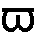 /λ, λ étant la longueur d'onde.

Dans un cas pour lequel la contribution liée à l'angle d'incidence est négligée (approximation paraxiale), le signal d'interférence à un pixel donné peut être modélisé par l'équation suivante : $I \left(ξ\right) = {\int }_{0}^{∞} g \left(k, ξ\right) V \left(k\right) dk$

I est l'intensité lumineuse mesurée sur le pixel donné au pas de déplacement ξ du dispositif de balayage 18, *V*(*k*) est la distribution du spectre de la source lumineuse, et *g*(*k*, ξ) peut s'écrire : $g \left(k, ξ\right) = R \left(k\right) + Z \left(k\right) + 2 \sqrt{R \left(k\right) . Z \left(k\right)} . cos \left[k\left(h-ξ\right)+γ\left(k\right)\right]$

Z correspond à la réflectance effective de l'objet à mesurer 17. Ce terme inclut la réflectance spectrale de l'objet au pixel donné et la transmittance du système de mesure comprenant la lame séparatrice 15 (ou le cube séparateur).

Il est possible d'écrire : $\sqrt{Z \left(k\right)} = \sqrt{T \left(k\right) . ρ \left(k\right)}$

T représente la transmittance du système de mesure, comprenant la lame séparatrice 15, et ρ la réflectance spectrale de l'objet à mesurer 17.

La réflectance effective de référence, notée *R*, inclut les réflectances ou transmittances des éléments optiques du système 1, telles que la réflectance du miroir de référence 16 et la transmittance de la lame séparatrice 15. Le paramètre *h* représente la hauteur de l'objet et le paramètre γ est un terme de déphasage de l'onde lumineuse à la réflexion sur l'objet et à travers le système de mesure.

La Figure 4 montre des exemples de signaux d'interférence mesurés ou d'interférogrammes *I(ξ)* indiqués par les signes 31-34.

Pour plus de clarté dans les notations, on ne mentionne pas jusqu'ici et dans tout le reste du document la dépendance de la localisation (*x,y*) dans l'image (ou dans le plan conjugué par le système optique d'imagerie de l'objet) des termes *V, R, Z, h* et γ. Celle-ci n'est cependant pas négligée.

L'amplitude des sinusoïdes formant des signaux d'interférence en lumière monochromatique est proportionnelle à : $V \left(k\right) \sqrt{R \left(k\right) Z \left(k\right)}$

Elle est l'expression du module de la transformée de Fourier de l'interférogramme correspondant à la densité spectrale optique *P*(*k*)*.*

Une étape de calcul de la transformée de Fourier de l'interférogramme permet d'obtenir une mesure de la densité spectrale optique de la lumière réfléchie par l'objet, à travers le module de la transformée de Fourier. La densité spectrale permet d'obtenir une information sur la réflectance spectrale ρ(*k*) de l'objet.

Le champ de vue du système 1 ou microscope interférométrique tel qu'illustré à la Figure 3 est décomposé en sous-régions, en général définies par les pixels de la caméra de détection 11. Un interférogramme, ou signal interférométrique, est ainsi acquis pour chaque pixel.

Selon une variante, il est aussi possible de considérer la phase de la transformée de Fourier de l'interférogramme, qui permet d'obtenir la réflectance complexe de l'empilement de matériaux.

Dans la suite du document, nous ne décrivons que l'utilisation du module de la transformée de Fourier de l'interférogramme correspondant à la densité spectrale optique *P*(*k*), ce qui n'est nullement limitatif.

La variable d'intérêt étant la réflectance spectrale ρ(*k*), il peut être utile de normaliser la densité spectrale optique *P*(*k*) afin d'améliorer les classifications et/ou calculs des épaisseurs et/ou topographies subséquents.

Une étape de normalisation du module de la transformée de Fourier de l'interférogramme (et donc de la densité spectrale optique) permet de déduire une réflectance spectrale en tout point (*x,y*) du champ de vue.

Pour ce faire, plusieurs stratégies sont envisageables, notamment une normalisation à partir d'un signal de référence, ou une auto-normalisation, qui seront décrits ci-après.

Le principe de la normalisation à partir d'un signal de référence consiste à réaliser une acquisition d'un signal interférométrique sur un objet ou échantillon de référence connu recouvert ou constitué d'un matériau homogène. Cet échantillon de référence peut être, par exemple, une plaque de silicium. A partir du signal acquis, le module de la transformée de Fourier sur cet échantillon de référence est calculé en chaque point de l'image, ce qui fournit une densité spectrale optique de référence.

Il est ensuite possible de déterminer, en chaque pixel de l'image, les valeurs de réflectance spectrale *ρ(k)* en calculant le ratio entre la densité spectrale optique sur l'objet à mesurer et la densité spectrale optique de référence. Bien entendu, les valeurs *ρ*(*k*) ne sont calculées que dans la bande spectrale du système d'éclairage 10, pour des valeurs de densité spectrale optique de référence non nulles.

Cette approche nécessite de calibrer le système 1 de mesure sur un objet de référence connu (voire de recalibrer périodiquement le système). La qualité de la normalisation dépend grandement de la régularité de déplacement du dispositif de balayage 18 le long de sa course et de la stabilité de l'éclairage d'une acquisition à l'autre.

Suivant une variante, la densité spectrale optique de référence peut être une valeur globale ou moyenne calculée sur toute la surface de l'échantillon de référence si les caractéristiques optiques du système de mesure sont suffisamment homogènes.

Selon le principe de l'auto-normalisation, on pose comme approximation que la plupart des grandeurs ne sont pas dépendantes de leur position sur l'image (éclairage homogène, pas de variation spatiale des propriétés du miroir de référence 16 et de la lame séparatrice 15). Seules les valeurs de la réflectance spectrale *ρ*(*k*) sont considérées comme pouvant varier selon la localisation sur l'image en fonction des motifs de l'objet. On calcule le module moyen de la transformée de Fourier sur l'image pour obtenir ainsi une expression de la densité spectrale optique de référence. On réalise alors le rapport en chaque pixel du module de la transformée de Fourier sur le spectre moyen (ou de la densité spectrale optique sur la densité spectrale optique de référence).

L'approche d'auto-normalisation a pour avantage de ne pas nécessiter d'étape de calibration au préalable. Cependant, on obtient alors une carte de pseudo-réflectance comme le ratio entre la réflectance du pixel donné à chaque nombre d'onde avec la moyenne des réflectances à ce nombre d'onde.

Un autre exemple de mesure est illustré sur la Figure 5. Les épaisseurs des couches des structures 41, 42 d'un objet 40 représenté sur la 6a doivent être déterminées. Il est connu que les structures à mesurer sont formées par des couches d'oxyde de différentes épaisseurs et déposées sur du silicium. Une valeur précise des épaisseurs des couches d'oxyde pour chaque point d'une image de mesure de l'objet 40 doit être déterminée.

Des signaux d'interférence mesurés associés à un pixel localisé dans chacune des deux régions, montrés sur la Figure 5b, et définies par les structures sont représentés sur la Figure 5c.

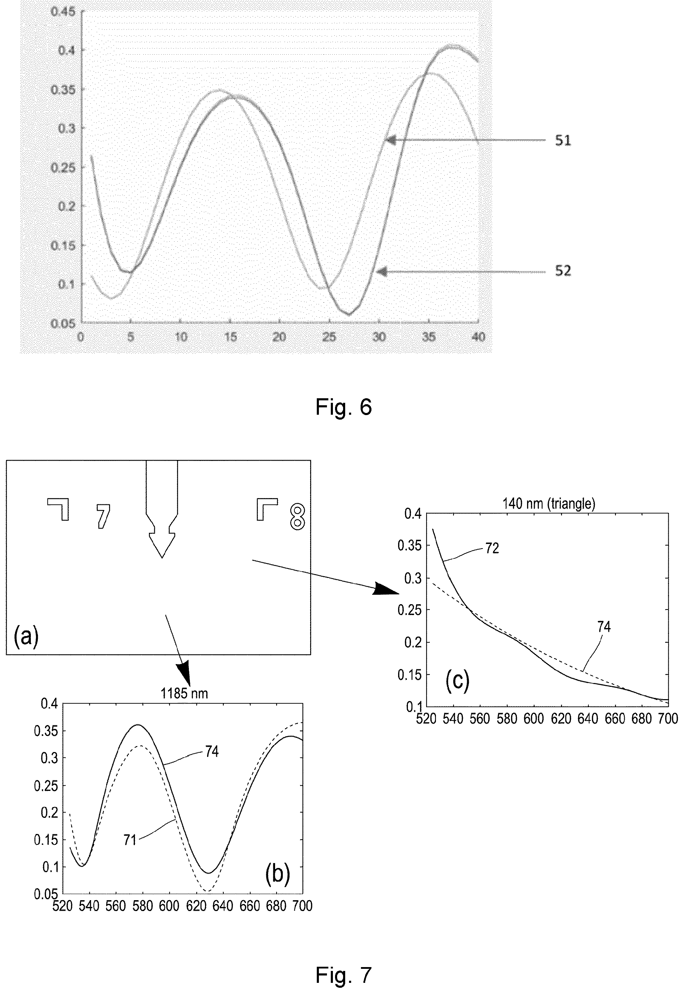

Sur la base de mesures de signaux d'interférence sur un objet de référence (par exemple identique à celui illustré sur la Figure 7a), ou de connaissances théoriques *à priori,* on définit les empilements attendus sur la surface de l'objet. Dans le cas de l'exemple de la Figure 5, les épaisseurs théoriques ou attendues sont, respectivement, 1,2 µm de silice (SiO₂) sur un substrat de silicium (Si) d'une part et 0,1 µm de SiO₂ sur un substrat de Si d'autre part.

Il est ainsi possible de calculer des réflectances spectrales théoriques, ou de référence, pour générer des classes de signaux interférométriques comme décrit précédemment.

La Figure 6 illustre un exemple de réflectance spectrale théorique 51 pour une couche de 1,2 µm de SiO₂ déposée sur un substrat de Si.

Ces signaux de réflectance spectrale théorique constituent les signaux interférométriques de référence associés aux deux classes de référence utilisées pour la segmentation de l'objet, ces classes correspondant aux deux types de couches ou structures connues.

A titre d'exemple, la réflectance spectrale théorique ou de référence correspondant au cas d'une couche transparente simple déposée sur un milieu réfléchissant, telle qu'illustrée sur la Figure 6, peut être construite mathématiquement, en incidence normale, grâce à l'équation suivante : $R = \frac{{r}_{01} + {r}_{12} {e}^{- j 2 β}}{1 + {r}_{01} {r}_{12} {e}^{- j 2 β}}$

Les coefficients r₀₁ et r₁₂ sont les coefficients de réflexion de Fresnel qui dépendent de la longueur d'onde. Le coefficient r₀₁ correspond à l'interface entre le milieu ambiant et le matériau transparent, et le coefficient r₁₂ à l'interface entre la couche transparente et le substrat.

La constante β est définie comme β= *2dn,* où d est l'épaisseur de la couche, et *n* est son indice de réfraction qui dépend également de la longueur d'onde.

Sur la Figure 6 est également montrée une mesure de réflectance spectrale 52, attribuée à la structure de référence correspondant à une couche de SiO₂ du fait de sa plus proche ressemblance à cette référence en termes de réflectance spectrale.

La Figure 7a illustre des résultats de la classification, ou segmentation, obtenue par l'étape d'attribution des signaux interférométriques à des classes du procédé selon l'invention. Cette classification aboutit à une répartition des pixels de l'image entre les deux structures de référence connues, à partir d'une attribution des signaux interférométriques mesurés à l'une des deux classes préalablement définies et correspondant à ces structures de référence.

Une fois le pixel attribué à la classe de structure de référence correspondante, il est possible d'estimer la mesure d'épaisseur de silice déposée sur la couche de silicium. Un recalage des paramètres de la courbe théorique de la réflectance spectrale (voir l'équation Math. 1) avec la mesure de réflectance du pixel permet ainsi d'obtenir une valeur estimée de l'épaisseur d pour chaque pixel mesuré.

Les Figures 7b et 7c montrent la mise en correspondance des réflectances théoriques 73, 74 sur les réflectances mesurées 71, 72 après ajustement du paramètre d'épaisseur de couche pour un pixel de chacune des deux classes, respectivement, de la Figure 7a. Ce paramètre d'épaisseur donne ainsi une estimation de l'épaisseur de la couche transparente de silice en chaque pixel. Pour la Figure 7b, l'épaisseur est estimée à 1,185 µm, et pour la Figure 7c, l'épaisseur est estimée à 0,140 µm, ces deux valeurs étant cohérentes avec la forme de l'objet attendue.

Ce principe de mesure peut être étendu à des empilements multiples de couches ou des indices de réfraction complexes.

Par la suite, deux exemples de mise en œuvre de la segmentation de la surface de l'objet seront décrits plus en détails : premièrement, une implémentation de la classification des signaux interférométriques en classes basée sur l'algorithme des K-moyennes, et deuxièmement, une implémentation de la classification des signaux interférométriques en classes basée sur une combinaison d'un algorithme des K-moyennes et d'un algorithme de ligne de partage des eaux sur des données multispectrales pour réaliser une segmentation préliminaire et initialiser l'algorithme des K-moyennes. L'algorithme des K-moyennes est connu par ailleurs, il n'est donc pas détaillé ici.

### Utilisation de l'algorithme des K-moyennes pour la classification des signaux interférométriques

Dans cet exemple, on considère qu'il est possible de définir des réflectances spectrales de référence (ou des signaux interférométriques de référence) à partir d'une information approximative et *a priori* sur les structures ou les empilements sur la surface d'un objet à mesurer. Ces réflectances spectrales de référence forment un ensemble de classes prédéfinies.

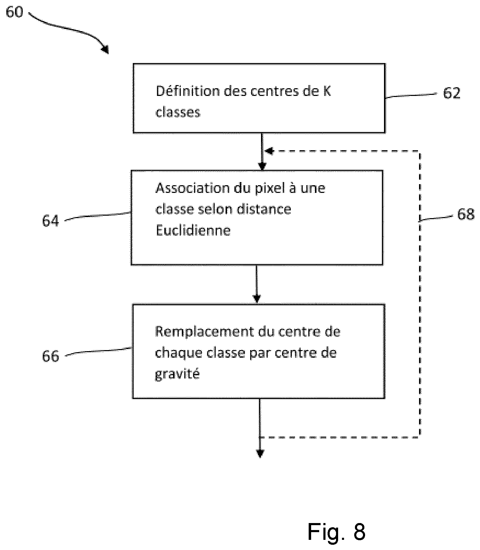

L'architecture 60 de l'algorithme est illustrée à la Figure 8.

Les réflectances spectrales de référence peuvent servir à initialiser un algorithme des K-moyennes en définissant des positions initiales des centres de classes (étape 62). Ensuite, à chaque pixel du champ de vue est assigné la classe dont le centre est plus proche en termes de signature spectrale, en utilisant, par exemple, une distance Euclidienne (étape 64). Puis pour chaque classe, le centre prédéfini est remplacé par le centre de gravité défini par le spectre moyen de tous les pixels assignés à cette classe (étape 66). Les étapes 64 et 66 sont itérées (flèche 68) jusqu'à ce que les centres des classes ne changent plus, au sens d'un critère de convergence basé, par exemple, sur des variations de réflectances spectrales de référence d'une itération à l'autre, ou de changements de classe des pixels entre deux itérations.

L'utilisation de l'algorithme des K-moyennes parait particulièrement adaptée par rapport à une simple classification au plus proche voisin directement sur les réflectances spectrales de référence car elle permet une adaptation de ces réflectances spectrales de référence (déplacement des centres).

Selon une variante, il peut être utile d'ajuster les réflectances spectrales de référence car on ne connait pas exactement la composition des empilements, en particulier des épaisseurs exactes de couches transparentes. De plus, sur toute la surface de l'objet, les structures peuvent présenter des variations d'épaisseur. Les réflectances spectrales de référence ne se superposent donc en général pas exactement avec les réflectances spectrales des pixels attribués à la classe correspondante.

S'il existe des zones dont on ne peut définir une réflectance spectrale de référence, en cas par exemple de présence de motifs sous-résolus ou de zones dont l'opérateur ignore complètement la composition, il est possible, pour cette étape d'attribution des pixels aux classes, de définir une initialisation partiellement ou complètement empirique. L'utilisateur peut, par exemple, désigner des pixels types sur un champ de vue de référence. Les signatures spectrales de ces pixels types servent alors à initialiser les centres de classes et l'algorithme s'exécute comme décrit précédemment.

Après convergence des K-moyennes sur des données où toutes les classes sont représentées, il est possible d'utiliser les réflectances spectrales des centres, ou spectre moyen de chaque classe, pour initialiser la classification pour tout champ de vue sur l'objet.

Lorsque toutes les classes ne sont pas nécessairement représentées sur chaque champ de vue, ne pas en tenir compte conduirait à un effet de sur-segmentation du champ de vue. Des régions homogènes peuvent, par exemple, être divisées en plusieurs zones et donc mal classifiées, les empilements de matériaux seraient donc mal identifiés pour une grande partie des pixels. Il est nécessaire de supprimer les classes inutiles pour chaque prise de vue.

On peut établir différents critères pour sélectionner les classes à supprimer :
- Avant convergence des K-moyennes, on peut comparer le spectre moyen de la classe à la première itération à son spectre de référence. Au-delà d'une valeur seuil, on estime que la position du centre a divergée de sa position initiale, et la classe est considérée comme invalide et est supprimée.
- Avant convergence des K-moyennes, on peut considérer le nombre de pixels associés à chaque classe. En dessous d'un nombre seuil, la classe est considérée comme non représentative et est supprimée.
- Après convergence des K-moyennes, on peut comparer la distance entre les centres de classes 2 à 2. En dessous d'un certain seuil, on considère que des pixels correspondant à un même empilement de matériaux. Les classes concernées sont alors fusionnées.

### Utilisation conjointe d'un algorithme de segmentation préliminaire: algorithme de ligne de partage des eaux multispectral

Comme décrit précédemment, pour la classification pixelique, et en particulier pour le mode d'implémentation choisi des K-moyennes, l'initialisation des classes est une étape importante. En effet, si un trop grand nombre de classes sont définies ou si ces classes ne correspondent pas aux empilements réellement présents dans le champ de vue, le résultat de classification est compromis.

Il est ainsi possible d'effectuer une étape de segmentation préliminaire sans tenir compte de modèles de réflectance préétabli et de classifier ensuite les pixels région par région. De manière avantageuse, les résultats de cette étape de segmentation préliminaire peuvent être utilisés pour sélectionner les classes et ajuster les spectres de référence avant d'effectuer une classification pixel par pixel sur ce sous-ensemble de classes.

Dans l'exemple illustré, on effectue cette segmentation préliminaire en utilisant la réflectance, ou la réflectance spectrale issue des signaux interférométriques. En effet, dans beaucoup de cas, comme par exemple illustré à la Figure 4, cette réflectance spectrale varie entre les différentes structures ou matériaux.

Pour effectuer la segmentation préliminaire, un algorithme de ligne de partage des eaux sur données multispectrales tel que décrit par Li et al., « Multispectral image segmentation by a multichannel watershed-based approach », International Journal of Remote Sensing, 2004, vol. 28, p. 4429-4452, est utilisé. Il s'agit d'une approche basée sur les contours, c'est-à-dire qu'on considère que les régions homogènes au sens de la réflectance et que l'on cherche à segmenter, sont séparées par des gradients multispectraux.

La première étape de l'algorithme de segmentation préliminaire est le calcul de la carte de gradient multispectral.

Le gradient multispectral est défini comme suit. Les données d'entrée de l'algorithme sont un cube de réflectance, chaque pixel est défini par un vecteur de dimension *N*, où *N* est le nombre de longueurs d'onde dont on dispose pour décrire la réflectance de ce pixel. L'objectif est de créer une image de gradient en niveau de gris à partir des données multispectrales pour pouvoir appliquer ensuite un algorithme classique de ligne de partage des eaux.

La seconde étape de l'algorithme de segmentation préliminaire est l'application de l'algorithme de ligne de partage des eaux sur la carte de gradient calculée (carte en niveaux de gris).

On obtient ainsi une répartition des signaux interférométriques en régions homogènes.

Comme expliqué précédemment, on peut alors déterminer des classes à partir des régions homogènes. On peut, par exemple, calculer pour chaque région un signal interférométrique de référence à partir des signaux interférométriques de cette région, et l'utiliser pour initialiser une classe. Bien entendu, on peut générer des classes à partir de signaux interférométriques issus de régions distinctes mais considérés comme similaires, et/ou utiliser des connaissances *a priori* sur l'objet pour générer les classes.

Une fois ces étapes de segmentation préliminaire effectuées, la classification des signaux interférométriques en classes pixel par pixel peut être réalisée, notamment en utilisant l'algorithme des K-moyennes comme expliqué précédemment.

Bien sûr, l'invention n'est pas limitée aux exemples qui viennent d'être décrits et de nombreux aménagements peuvent être apportés à ces exemples sans sortir du cadre de l'invention.

## Revendications

1. Procédé (100) de mesure d'une surface d'un objet (17) comprenant au moins une structure (41, 42) par interférométrie optique à faible cohérence, le procédé (100) comprenant les étapes suivantes :
- acquisition (102) d'un signal interférométrique en une pluralité de points, dits de mesure, de ladite surface dans un champ de vue ;
- classification, par une technique d'apprentissage automatique, des signaux interférométriques acquis selon une pluralité de classes, la classification comprenant une étape (106) d'initialisation de classes comprenant les étapes suivantes :
∘ répartition des signaux interférométriques acquis selon des régions homogènes du champ de vue, où les régions sont homogènes selon un critère prédéfini ;
∘ détermination des classes à partir des signaux interférométriques répartis dans lesdites régions homogènes.
chaque classe étant associée à un signal interférométrique de référence représentatif d'une structure type ; et
- analyse (114) des signaux interférométriques pour en déduire une information sur la structure aux points de mesure, en fonction de la classe de chaque signal interférométrique.

2. Procédé (100) selon la revendication 1, **caractérisé en ce que** la technique d'apprentissage automatique implique des réseaux de neurones.

3. Procédé (100) selon la revendication 2, **caractérisé en ce que** la technique d'apprentissage automatique met en œuvre des données d'apprentissage correspondant aux signaux interférométriques de référence prédéfinis théoriquement ou expérimentalement, ou déduites lors des apprentissages en acceptant ou en rejetant certaines d'entre les données.

4. Procédé (100) selon l'une quelconque des revendications précédentes, **caractérisé en ce que** l'étape (106) d'initialisation de classes comprend la fourniture d'au moins l'un des éléments suivants :
- une liste de classes ;
- une estimation *à priori* d'un nombre de classes présentes dans le champ de vue.

5. Procédé (100) selon la revendication précédente, **caractérisé en ce que** la fourniture d'une liste de classes comprend au moins l'une des étapes suivantes :
- détermination de classes à partir de mesures de signaux interférométriques sur une surface de référence ayant des structures connues ;
- détermination de classes à partir de connaissances *à priori* sur les structures présentes sur la surface de l'objet ;
- détermination de classes expérimentalement à partir de mesures effectuées sur un objet de référence avec des structures connues.

6. Procédé (100) selon l'une quelconque des revendications précédentes, **caractérisé en ce que** l'étape (114) d'analyse des signaux interférométriques comprend une identification d'une structure ou d'une propriété d'une structure en fonction de la classe de chaque signal interférométrique.

7. Procédé (100) selon l'une quelconque des revendications précédentes, **caractérisé en ce que** l'étape (114) d'analyse des signaux interférométriques comprend la détermination de l'épaisseur d'une ou de plusieurs couches transparentes en appliquant un modèle de réflectance spectrale dépendant de la classe de chaque signal interférométrique.

8. Procédé (100) selon l'une quelconque des revendications précédentes, **caractérisé en ce que** l'étape (114) d'analyse des signaux interférométriques comprend une détermination de hauteur de la surface aux points de mesure en prenant en compte un facteur de déphasage de chaque signal interférométrique dépendant de sa classe.

9. Procédé (100) selon la revendication précédente, comprenant en outre une étape de détermination d'un profil corrigé de la surface de l'objet et/ou d'une topologie de l'au moins une structure (41, 42) sur la surface de l'objet.

10. Procédé (100) selon l'une quelconque des revendications précédentes, **caractérisé en ce que** l'étape (102) d'acquisition est réalisée par une mesure d'un signal interférométrique pour chaque pixel d'un capteur (11) effectuant une mesure plein champ, où chaque pixel du champ de vue du capteur (11) correspond à un point de mesure.

11. Procédé (100) selon l'une quelconque des revendications précédentes, **caractérisé en ce qu'**il est mis en œuvre avec un substrat semi-conducteur ou un substrat transparent.

12. Système (1) de mesure par interférométrie optique à faible cohérence, pour mesurer une surface d'un substrat (17) comprenant au moins une structure (41, 42), le système (1) comprenant :
- un dispositif d'acquisition (11) d'un signal interférométrique en une pluralité de points, dits de mesure, de ladite surface dans un champ de vue, et
- un module (19) de traitement des signaux interférométriques acquis, configuré pour :
• classifier, par une technique d'apprentissage automatique, les signaux interférométriques acquis selon une pluralité de classes, la classification comprenant une initialisation de classes comprenant :
▪ répartition des signaux interférométriques acquis selon des régions homogènes du champ de vue, où les régions sont homogènes selon un critère prédéfini ;
▪ détermination de classes à partir des signaux interférométriques répartis dans lesdites régions homogènes,
chaque classe étant associée à un signal interférométrique de référence représentatif d'une structure type ; et
• réaliser une analyse des signaux interférométriques pour en déduire une information sur la structure aux points de mesure, en fonction de la classe de chaque signal interférométrique.

13. Système (1) selon la revendication 12, **caractérisé en ce que** le dispositif d'acquisition d'un signal interférométrique comprend un capteur interférométrique plein champ.

## Patentansprüche

1. Verfahren (100) zum Messen einer Oberfläche eines mindestens eine Struktur (41, 42) umfassenden Objekts (17) durch optische Interferometrie mit niedriger Kohärenz, das Verfahren (100) umfassend die folgenden Schritte:
- Erfassen (102) eines interferometrischen Signals an einer Vielzahl von als Messpunkten bezeichneten Punkten der Oberfläche in einem Sichtfeld;
- Klassifizieren der erfassten interferometrischen Signale gemäß einer Vielzahl von Klassen durch eine Technik des maschinellen Lernens, wobei die Klassifizierung einen Schritt (106) des Initialisierens von Klassen umfasst, umfassend die folgenden Schritte:
∘ Verteilen der erfassten interferometrischen Signale gemäß homogenen Bereichen des Sichtfeldes, wobei die Bereiche gemäß einem vordefinierten Kriterium homogen sind;
∘ Bestimmen von Klassen anhand der interferometrischen Signale, die in den homogenen Bereichen verteilt sind,
wobei jede Klasse einem interferometrischen Referenzsignal zugeordnet ist, das eine typische Struktur repräsentiert; und
- Analysieren (114) der interferometrischen Signale, um daraus in Abhängigkeit von der Klasse jedes interferometrischen Signals eine Information über die Struktur an dem Messpunkt abzuleiten.

2. Verfahren (100) nach Anspruch 1, **dadurch gekennzeichnet, dass** die Technik des maschinellen Lernens neuronale Netze beinhaltet.

3. Verfahren (100) nach Anspruch 2, **dadurch gekennzeichnet, dass** die Technik des maschinellen Lernens Trainingsdaten verwendet, die theoretisch oder experimentell vordefinierten interferometrischen Referenzsignalen entsprechen oder während der Lernvorgänge durch Akzeptieren oder Verwerfen gewisser der Daten abgeleitet wurden.

4. Verfahren (100) nach einem der vorstehenden Ansprüche, **dadurch gekennzeichnet, dass** der Schritt (106) des Initialisierens von Klassen das Bereitstellen von mindestens einem der folgenden Elemente umfasst:
- eine Liste von Klassen;
- eine A-priori-Schätzung einer Anzahl von Klassen, die in dem Sichtfeld vorhanden sind.

5. Verfahren (100) nach dem vorstehenden Anspruch, **dadurch gekennzeichnet, dass** das Bereitstellen einer Liste von Klassen mindestens einen der folgenden Schritte umfasst:
- Bestimmen von Klassen anhand von Messungen mit interferometrischen Signalen auf einer Referenzoberfläche mit bekannten Strukturen;
- Bestimmen von Klassen anhand von A-Priori-Wissen über die auf der Oberfläche des Objekts vorhandenen Strukturen;
- experimentelles Bestimmen von Klassen anhand von auf einem Referenzobjekt mit bekannten Strukturen durchgeführten Messungen.

6. Verfahren (100) nach einem der vorstehenden Ansprüche, **dadurch gekennzeichnet, dass** der Schritt (114) des Analysierens der interferometrischen Signale ein Identifizieren einer Struktur oder eines Merkmals einer Struktur in Abhängigkeit von der Klasse jedes interferometrischen Signals umfasst.

7. Verfahren (100) nach einem der vorstehenden Ansprüche, **dadurch gekennzeichnet, dass** der Schritt (114) des Analysierens der interferometrischen Signale das Bestimmen der Dicke einer oder mehrerer transparenter Schichten durch Anwenden eines von der Klasse jedes interferometrischen Signals abhängenden Modells der spektralen Reflexion umfasst.

8. Verfahren (100) nach einem der vorstehenden Ansprüche, **dadurch gekennzeichnet, dass** der Schritt (114) des Analysierens der interferometrischen Signale ein Bestimmen der Höhe der Oberfläche an den Messpunkten unter Berücksichtigung eines von seiner Klasse abhängenden Phasenverschiebungsfaktors jedes interferometrischen Signals umfasst.

9. Verfahren (100) nach dem vorstehenden Anspruch, ferner umfassend einen Schritt des Bestimmens eines korrigierten Profils der Oberfläche des Objekts und/oder einer Topologie der mindestens einen Struktur (41, 42) auf der Oberfläche des Objekts.

10. Verfahren (100) nach einem der vorstehenden Ansprüche, **dadurch gekennzeichnet, dass** der Schritt (102) des Erfassens durch eine Messung eines interferometrischen Signals für jedes Pixel eines Sensors (11) durchgeführt wird, indem eine Vollfeldmessung vorgenommen wird, wobei jedes Pixel des Sichtfeldes des Sensors (11) einem Messpunkt entspricht.

11. Verfahren (100) nach einem der vorstehenden Ansprüche, **dadurch gekennzeichnet, dass** es mit einem Halbleitersubstrat oder einem transparenten Substrat implementiert wird.

12. System (1) zum Messen durch optische Interferometrie mit niedriger Kohärenz, um eine Oberfläche eines mindestens eine Struktur (41, 42) umfassenden Substrats (17) zu messen, wobei das System (1) umfasst:
- eine Vorrichtung (11) zum Erfassen eines interferometrischen Signals an einer Vielzahl von als Messpunkten bezeichneten Punkten der Oberfläche in einem Sichtfeld, und
- ein Modul (19) zum Verarbeiten der erfassten interferometrischen Signale, das konfiguriert ist zum:
• Klassifizieren der erfassten interferometrischen Signale gemäß einer Vielzahl von Klassen durch eine Technik des maschinellen Lernens, wobei die Klassifizierung ein Initialisieren von Klassen umfasst, umfassend:
▪ Verteilen der erfassten interferometrischen Signale gemäß homogenen Bereichen des Sichtfeldes, wobei die Bereiche gemäß einem vordefinierten Kriterium homogen sind;
▪ Bestimmen von Klassen anhand der interferometrischen Signale, die in den homogenen Bereichen verteilt sind,
wobei jede Klasse einem interferometrischen Referenzsignal zugeordnet ist, das eine typische Struktur repräsentiert; und
• Durchführen einer Analyse der interferometrischen Signale, um daraus in Abhängigkeit von der Klasse jedes interferometrischen Signals eine Information über die Struktur an dem Messpunkt abzuleiten.

13. System (1) nach Anspruch 12, **dadurch gekennzeichnet, dass** die Vorrichtung zum Erfassen eines interferometrischen Signals einen interferometrischen Vollfeldsensor umfasst.

## Claims

1. **Method** (100) for measuring a surface of an object (17) comprising at least one structure (41, 42) using low-coherence optical interferometry, the method (100) comprising the following steps:
- acquiring (102) an interferometric signal at a plurality of points, referred to as measurement points, on said surface within a field of view;
- classifying, using a machine learning technique, the acquired interferometric signals into a plurality of classes, the classification comprising a step (106) of initializing classes, which step comprises the following steps:
∘ distributing the acquired interferometric signals into homogeneous regions of the field of view, where the regions are homogeneous according to a predefined criterion;
∘ determining the classes based on the interferometric signals distributed throughout said homogeneous regions;
each class being associated with a reference interferometric signal representative of a typical structure; and
- analyzing (114) the interferometric signals in order to derive therefrom information about the structure at the measurement points, according to the class of each interferometric signal.

2. Method (100) according to claim 1, **characterized in that** the machine learning technique involves neural networks.

3. Method (100) according to claim 2, **characterized in that** the machine learning technique uses training data corresponding to the reference interferometric signals, which training data are predefined theoretically or experimentally, or are derived during the training by accepting or rejecting certain data.

4. Method (100) according to any of the preceding claims, **characterized in that** the step (106) of initializing classes comprises providing at least one of the following elements:
- a class list;
- an *a priori* estimate of a number of classes present in the field of view.

5. Method (100) according to the preceding claim, **characterized in that** providing a list of classes comprises at least one of the following steps:
- determining classes based on measurements of interferometric signals on a reference surface having known structures;
- determining classes based on *a priori* knowledge about the structures present on the surface of the object;
- experimentally determining classes based on measurements taken on a reference object having known structures.

6. Method (100) according to any of the preceding claims, **characterized in that** the step (114) of analyzing the interferometric signals comprises identifying a structure or a property of a structure according to the class of each interferometric signal.

7. Method (100) according to any of the preceding claims, **characterized in that** the step (114) of analyzing the interferometric signals comprises determining the thickness of one or more transparent layers by applying a spectral reflectance model dependent on the class of each interferometric signal.

8. Method (100) according to any of the preceding claims, **characterized in that** the step (114) of analyzing the interferometric signals comprises determining the surface height at the measurement points by taking into account a phase-shift factor of each interferometric signal dependent on the class thereof.

9. Method (100) according to the preceding claim, further comprising a step of determining a corrected profile of the surface of the object and/or determining a topology of the at least one structure (41, 42) on the surface of the object.

10. Method (100) according to any of the preceding claims, **characterized in that** the step (102) of acquiring is carried out by measuring an interferometric signal for each pixel of a sensor (11) performing a full-field measurement, where each pixel in the field of view of the sensor (11) corresponds to a measurement point.

11. Method (100) according to any of the preceding claims, **characterized in that** it is implemented using a semiconductor substrate or a transparent substrate.

12. Low-coherence optical interferometric measurement system (1) for measuring a surface of a substrate (17) comprising at least one structure (41, 42), the system (1) comprising:
- a device (11) for acquiring an interferometric signal at a plurality of points, referred to as measurement points, on said surface within a field of view, and
- a module (19) for processing the acquired interferometric signals, configured to:
• classify, using a machine learning technique, the acquired interferometric signals into a plurality of classes, the classification comprising an initialization of classes comprising:
▪ distributing the acquired interferometric signals into homogeneous regions of the field of view, where the regions are homogeneous according to a predefined criterion;
▪ determining classes based on interferometric signals distributed throughout said homogeneous regions,
each class being associated with a reference interferometric signal representative of a typical structure; and
• carry out an analysis of the interferometric signals in order to derive therefrom information about the structure at the measurement points, according to the class of each interferometric signal.

13. System (1) according to claim 12, **characterized in that** the device for acquiring an interferometric signal comprises a full-field interferometric sensor.
